# EUROPÄISCHE PATENTANMELDUNG

(11) **EP 2 006 465 A2**
(43) Veröffentlichungstag der Anmeldung: **24.12.2008**
(21) Anmeldenummer: 08010404.5
(22) Anmeldetag: 07.06.2008
(51) Int. Cl.: E04F 13/08, E04F 13/14, E06B 3/54

(54) **Mehrschichtkörper, Befestigungsanordnung, Verfahren zur Herstellung der Befestigungsanordnung und Befestigungselement**

(30) Priorität: 22.06.2007 IT PD20070214
(71) Anmelder: fischerwerke GmbH & Co. KG, 72178 Waldachtal (DE)
(72) Erfinder: Faedda, Francesco, 35020 Ponte San Nicolo Padova (IT); Unterweger, Roland, 72285 Pfalzgrafenweiler (DE)

(57) **Zusammenfassung**

Die Erfindung betrifft eine Befestigungsanordnung (13) mit einem Mehrschichtkörper mit einer Zwischenschicht (4), insbesondere aus Verbundsicherheitsglas, wobei ein Befestigungsbereich (5) vorgesehen ist und der Befestigungsbereich (5) eine erste Bohrung (6) in der ersten Schicht (2) aufweist, mit einem Befestigungselement (14) mit einem Lastangriffsmittel (23) und einer Unterlegscheibe (18), wobei die Unterlegscheibe (18) einen Bund (20) und einen hülsenförmigen Kragen (21) aufweist. Um ein Ausknüpfen des Befestigungselements (14) aus dem Mehrschichtkörper (1) im Fall eines Bruchs einer oder mehrerer Schichten (2, 3) des Mehrschichtkörpers (1) zu verhindern, schlägt die Erfindung vor, dass eine Verbindungshülse (4) mit der Zwischenschicht (4) und mit der Wand (10) der ersten Bohrung (6) verbunden und dem Befestigungselement (14) verbindbar ist.

## Beschreibung

Die Erfindung betrifft einen Mehrschichtkörper mit den Merkmalen des Oberbegriffs des Anspruchs 1, eine Befestigungsanordnung mit den Merkmalen des Oberbegriffs des Anspruchs 10, ein Verfahren zur Herstellung der Befestigungsanordnung mit den Merkmalen des Oberbegriffs des Anspruchs 15 und ein Befestigungselement mit den Merkmalen des Oberbegriffs des Anspruchs 16.

Mehrschichtkörper, insbesondere Mehrschichtenglas, die aus mindestens zwei Schichten bestehen und über eine Zwischenschicht miteinander verbunden sind, sind bekannt. Beispielsweise wird Verbundsicherheitsglas hergestellt, dessen Schichten aus vorgespanntem oder teilweise vorgespanntem Glas bestehen, mit einer Zwischenschicht aus einer Kunststofffolie oder einem Kleber. Die Schichten des Mehrschichtkörpers werden beispielsweise durch Laminieren mit der Zwischenschicht und somit miteinander verbunden. Darüber hinaus sind auch Mehrschichtkörper bekannt, die aus Naturwerksteinplatten in Verbindung mit Glas hergestellt sind. Die Aufzählung der bekannten Mehrschichtkörper ist nicht abschließend gemeint. Derartige Mehrschichtkörper werden insbesondere dann eingesetzt, wenn verhindert werden soll, dass beim Zerbrechen einer Schicht die Bruchstücke herausfallen und Schaden an Personen oder Gegenständen verursachen könnten. Wird eine Schicht, oder gar beide Schichten eines Mehrschichtkörpers zerstört, so hält die Zwischenschicht die Bruchstücke der beiden Schichten zusammen und verleiht ihnen eine gewisse Resttragfähigkeit. Allerdings ist der Mehrschichtkörper nach dem Bruch leicht verformbar.

Zur Befestigung von Mehrschichtkörper ist insbesondere aus Fassadenanwendungen bekannt, dass die Mehrschichtkörper Befestigungsbereiche mit Befestigungselementen, beispielsweise mit so genannten Punkthaltern, aufweisen. Eine derartige Befestigungsanordnung zeigt die Druckschrift WO 01/88305 A1. In der Druckschrift ist ein Mehrschichtkörper aus Verbundsicherheitsglas beschrieben, mit einer ersten Scheibe und einer zweiten Scheibe, die durch eine Zwischenschicht verbunden sind, wobei die erste Scheibe eine Durchgangsbohrung und die zweite Scheibe eine Hinterschnittbohrung aufweist. Als Befestigungselement wird ein Hinterschnittanker verwendet, der in der Hinterschnittbohrung der zweiten Scheibe befestigt ist. Kennzeichnend ist, dass die erste Bohrung mit einem deutlich größeren Durchmesser ausgeführt ist als die Hinterschnittbohrung, wodurch zwischen der Bohrlochwand der ersten Bohrung und einer Unterlegscheibe des Hinterschnittankers ein Ringsspalt entsteht, der zum Toleranzausgleich nachträglich mit einer Injektionsmasse verfüllt werden kann. Das Befestigungselement weist einen Bolzen mit einem Lastangriffsmittel in Form eines Außengewindes auf, mit dem das Verbundsicherheitsglas an einer Unterkonstruktion befestigt werden kann.

Es sind zudem Punkthalter bekannt, beispielsweise aus der Druckschrift EP 619 435, bei denen auch die zweite Bohrung eine Durchgangsbohrung ist, und das Befestigungselement den Mehrschichtkörper vollständig durchdringt. Der Mehrschichtkörper wird durch am Befestigungselement angeordnete Auflegeteile gehalten, die jeweils auf der Außenseite der äußersten Schicht des Mehrschichtkörpers aufliegen. Nachteilig an diesen Mehrschichtkörpern ist, dass beim Bruch beider Schichten des Mehrschichtkörpers eine Formstabilität der Schichten nicht mehr gewährleistet ist. Insbesondere im Befestigungsbereich, in dem zwischen den Punkthaltern und den Schichten Kräfte übertragen werden, kann dies dazu führen, dass sich die Bohrungen derart verformen, dass es zu einem Ausknüpfen der Punktehalter aus dem Mehrschichtkörper kommt.

Aufgabe der Erfindung ist, die bekannten Mehrschichtkörper derart zu verbessern, dass ein Ausknüpfen des Befestigungselements aus dem Mehrschichtkörper im Fall eines Bruchs einer oder mehrerer Schichten des Mehrschichtkörpers verhindert wird.

Diese Aufgabe wird erfindungsgemäß durch einen Mehrschichtkörper mit den Merkmalen des Anspruchs 1, durch eine Befestigungsanordnung mit den Merkmalen des Anspruchs 10 und einem Befestigungselement mit den Merkmalen des Anspruchs 16 gelöst. Erfindungsgemäß wird die Befestigungsanordnung mit einem Verfahren mit den Merkmalen des Anspruchs 15 hergestellt. Der erfindungsgemäßen Mehrschichtkörper, insbesondere aus Verbundsicherheitsglas, mit einer ersten Schicht und einer zweiten Schicht sowie einer Zwischenschicht zum Verbinden der Schichten weist einen Befestigungsbereich auf. In dem Befestigungsbereich befindet sich eine erste Bohrung in der ersten Schicht. Erfindungsgemäß weist der Befestigungsbereich eine Verbindungshülse auf, die mit der Zwischenlage und der Wand der ersten Bohrung fest verbunden ist, beispielsweise durch eine Verklebung. Die Verklebung erfolgt insbesondere mit dem Material der Verbindungshülse selbst, beispielsweise durch Erwärmung und Pressung, oder durch eine zusätzliche Klebermasse. Der Mehrschichtkörper kann in diesem Fall durch ein Befestigungselement derart befestigt werden, dass eine Kraftübertragung nur zwischen der ersten Schicht und dem Befestigungselement stattfindet. Kräfte, die auf die zweite Schicht wirken, werden über die Zwischenschicht auf die erste Schicht übertragen. Durch die Verbindungshülse ist gewährleistet, dass beim Bruch einer oder beider Schichten des Mehrschichtkörpers der Befestigungsbereich, zumindest aber die Form der ersten Bohrung in der ersten Schicht, stabil bleibt. Stabil bedeutet hier, dass die Bohrung ihre Form nur leicht ändert, aber nicht derart, dass es zu einem Ausknüpfen eines Befestigungselements kommt. Zudem hält die Verbindungshülse die Bruchstücke der ersten Schicht zusammen, so dass weiterhin eine Kraftübertragung zwischen Befestigungselement und der Zwischenschicht gewährleistet ist. Die Verbindungshülse kann aus einem Körper, beispielsweise einer Folie, oder aber aus einer Klebermasse, beispielsweise einem Epoxid-Kleber bestehen. Insbesondere bei einer Klebermasse wird die Form der Hülse erst beim Einbringen in die Bohrung hergestellt.

Eine bevorzugte Ausführungsform des erfindungsgemäßen Mehrschichtkörpers weist eine erste Bohrung, die erste Schicht durchdringt, und eine zweite Bohrung in der zweiten Schicht auf. Die Zwischenschicht ist im Regelfall durch eine dritte Bohrung durchdrungen. In diesem Fall können Kräfte, die auf die zweite Schicht wirken, direkt über die zweite Bohrung in ein Befestigungselement eingebracht werden. In diesem Fall ist auch denkbar, dass die Verbindungshülse in die zweite Bohrung reicht. Dies ist sinngemäß natürlich auch auf einen Mehrschichtkörper mit mehr als zwei Schichten übertragbar.

Vorzugsweise besteht die Verbindungshülse aus dem gleichen Kunststoff wie die Zwischenschicht. Die Verbindungshülse und die Zwischenschicht können insbesondere aus einem thermoplastischen Kunststoff bestehen. Von Vorteil ist, wenn beim Verbinden der ersten Schicht mit der zweiten Schicht durch die Zwischenschicht auch die Verbindungshülse mit der Zwischenlage und/oder Wand der ersten Bohrung verbunden wird. Dies ist beispielsweise beim Laminieren der Schichten möglich. Denkbar ist auch, dass die Hülse durch eine Klebermasse erst nach dem Einsetzen des Befestigungselements hergestellt wird.

Bei einer weiteren bevorzugten Ausführungsform des erfindungsgemäßen Mehrschichtkörpers besteht die Zwischenschicht aus einem ersten Kunststoff und die Verbindungshülse aus einem zweiten Kunststoff, wobei der erste Kunststoff und der zweite Kunststoff, insbesondere durch Erwärmen, miteinander verbindbar sind. Von Vorteil ist, wenn die Verbindung der Verbindungshülse mit der Zwischenschicht in einem Vorgang mit der Verbindung der ersten mit der zweiten Schicht durch die Zwischenschicht erfolgt. Die beiden Kunststoffe können auch durch Verklebung oder ähnliche Verfahren miteinander verbunden werden, wobei weiterhin denkbar ist, dass die Verbindungshülse selbst durch eine Klebermasse geformt wird, beispielsweise erst nach dem Einbringen eines Befestigungselements in dem Befestigungsbereich.

Bei einer bevorzugten Ausführungsform ist im Befestigungsbereich des Mehrschichtkörpers ein Befestigungselement angeordnet, das mit der Verbindungshülse verbindbar ist. Verbindbar bedeutet, dass das Befestigungselement mit der Verbindungshülse beispielsweise in Eingriff steht, oder mittels einer Füllmasse verbunden ist. Die Füllmasse kann auch gleichzeitig die Klebermasse sein, die die Verbindungshülse formt. Auch ist jede weitere form-, reib- oder stoffschlüssige Verbindung denkbar.

Um eine leistungsfähige Verbindung zwischen der Verbindungshülse und dem Befestigungselement zu realisieren, weist eine weitere bevorzugte Ausführungsform eine Verbindungshülse auf, bei der an der Innenseite der Verbindungshülse eine nutartige Vertiefung, beispielsweise in Form eines Gewindes oder ringförmig angeordnet ist. Durch diese nutartige Vertiefung ist es möglich, dass zwischen dem Befestigungselement und der Verbindungshülse, direkt oder mittels einer Füllmasse, Kräfte übertragen werden können. Die nutartige Vertiefung steht hierbei in Eingriff mit dem Befestigungselement oder aber mit der Füllmasse, und ist derart gestaltet, dass trotz Formänderungen der Bohrung eine Kraftübertragung gewährleistet ist. Insbesondere dann, wenn die erste Schicht gebrochen ist, ist es trotzdem noch möglich, von dem Befestigungselement, über die Verbindungshülse Kräfte auf die die Bohrung umschließenden Bruchstücke der Schicht zu übertragen, die durch die Zwischenschicht mit den weiteren Bruchstücken zusammengehalten werden. Hierdurch wird ein Ausknüpfen des Befestigungselements verhindert.

Bei einer weiteren bevorzugten Ausführungsform des Mehrschichtkörpers ist die erste oder die zweite Bohrung als Hinterschnittbohrung ausgeführt. In die Hinterschnittbohrung kann ein Befestigungselement eingeführt werden, das einen Spreizbereich aufweist, der in die Hinterschnittbohrung eingreift. Dies kann beispielsweise ein Hinterschnittanker mit einem Spreizbereich sein, der in die Hinterschnittbohrung mechanisch eingreift, oder aber ein Verbundanker, der durch eine Injektionsmasse, die gleichzeitig Füllmasse und/oder Klebermasse sein kann, in dem Hinterschnitt verankert wird.

Bei einer weiteren bevorzugten Ausführungsform des Mehrschichtkörpers ist die zweite Bohrung als Durchgangsbohrung ausgeführt, so dass ein Befestigungselement durch die zweite Bohrung durchführbar ist und die Schichten durchdringt. Gegenüber den bekannten durchgeführten Punkthaltern hat diese Ausführungsform den Vorteil, dass eine Kraftübertragung zwischen dem Befestigungselement und dem Mehrschichtkörper über die Zwischenlage in der ersten und/oder in der zweiten Bohrung möglich ist, so dass der Querschnitt der Auflegeteile deutlich reduziert werden kann, was optisch vorteilhaft ist.

Um eine möglichst gute Verbindung zwischen Befestigungselement und Verbindungshülse zu schaffen, weist ein erfindungsgemäßes Befestigungselement mit einem Bolzen und einem Lastangriffsmittel eine Unterlegscheibe mit einem Bund und einem hülsenförmigen Kragen auf, wobei der hülsenförmigen Kragen an seinem äußeren Umfang eine Erhebung aufweist. Diese Erhebung erstreckt sich insbesondere in Umfangsrichtung und ist derart gestaltet, dass sie mit der Verbindungshülse und/oder mit der Füllmasse in Eingriff steht. Statt eines Bolzens kann das Befestigungselement auch eine Innengewindehülse aufweisen.

Zur Herstellung einer erfindungsgemäßen Befestigungsanordnung werden in einem ersten Schritt die erste Bohrung mit der ersten Schicht mit der zweiten Bohrung der zweiten Schicht und einer dritten Bohrung in der Zwischenschicht aufeinander ausgerichtet und in einem zweiten Schritt die erste und die zweite Schicht durch die Zwischenschicht miteinander verbunden. Während oder nach diesen beiden Schritten wird das Befestigungselement und die Verbindungshülse in die Bohrungen eingebracht und miteinander verbunden. Hierdurch ergibt sich eine einfache und preisgünstige Form der Herstellung. Von Vorteil ist insbesondere, wenn während des Laminiervorgangs die Verbindungshülse mit der Zwischenschicht verbunden und nach dem Laminiervorgang das Befestigungselement in einem weiteren Schritt gesetzt wird. Da die Bohrungen in sich Toleranzen aufweisen, und zudem die Lage der Bohrungen von der gewünschten Position abweichen können, ist es von Vorteil, wenn die erste Bohrung einen größeren Durchmesser als die zweite Bohrung aufweist. Über den entstehenden Ringspalt zwischen der ersten Bohrung und dem Befestigungselement können die Toleranzen aufgenommen werden. Der Ringspalt zwischen Befestigungselement und der Wand der ersten Bohrung kann nachträglich mit der Füllmasse verfüllt werden, die gleichzeitig eine Verbindung zwischen Befestigungselement und der Verbindungshülse herstellt, insbesondere zwischen der Erhebung des hülsenförmigen Kragens der Unterlegscheibe des Befestigungselements und der nutartigen Vertiefung auf der Innenseite der Verbindungshülse. Die Füllmasse kann auch gleichzeitig Klebermasse zur Herstellung der Verbindungshülse sein.

Die Erfindung wird nachfolgend anhand von sechs Ausführungsbeispielen näher erläutert.

Es zeigen:
- Figur 1: ein erstes Ausführungsbeispiel eines Mehrschichtkörpers in perspektivischer Schnittdarstellung;
- Figur 2: eine erste Befestigungsanordnung in einer Schnittdarstellung;
- Figur 3: eine zweite Befestigungsanordnung in einer Schnittdarstellung;
- Figur 4: eine dritte Befestigungsanordnung in einer Schnittdarstellung;
- Figur 5: eine vierte Befestigungsanordnung in einer Schnittdarstellung; und
- Figur 6: eine fünfte Befestigungsanordnung in einer Schnittdarstellung.

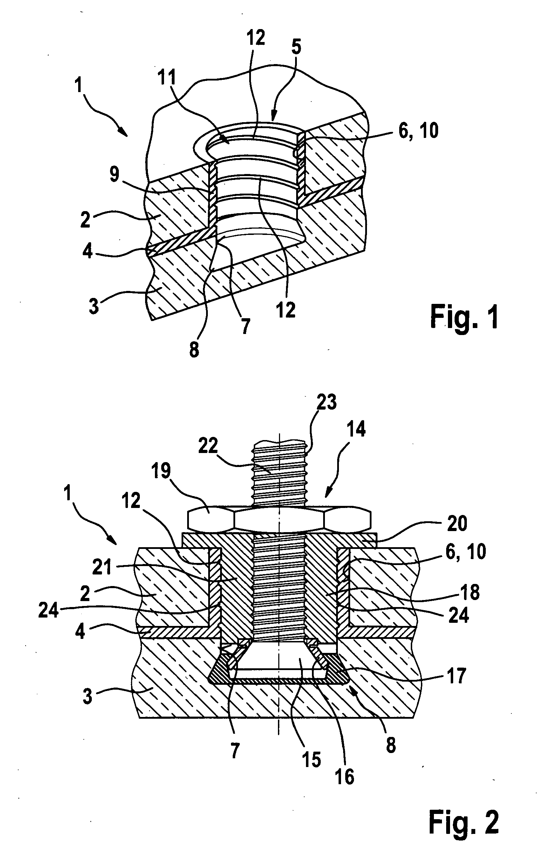

Figur 1 zeigt einen Mehrschichtkörper 1, beispielsweise eine Verbundglasscheibe, der eine erste Schicht 2 und eine zweite Schicht 3 und eine Zwischenschicht 4 zum Verbinden der ersten Schicht 2 mit der zweiten Schicht 3 aufweist. Der Mehrschichtkörper 1 weist einen Befestigungsbereich 5 auf, der zur Aufnahme eines nicht dargestellten Befestigungselements vorgesehen ist. Im Befestigungsbereich 5 ist eine erste Bohrung 6 in die erste Schicht 2 eingebracht, die diese durchdringt. In der zweiten Schicht 3 ist eine zweite Bohrung 7 mit einem Hinterschnitt 8 eingebracht. Die Zwischenlage 4 ist mit einer Verbindungshülse 9 verbunden. Die Verbindungshülse 9 ist zudem mit der Wand 10 der ersten Bohrung 6 durch eine Verklebung verbunden. Die Verbindungshülse 9 besteht, wie die Zwischenschicht 4, vorzugsweise aus einem thermoplastischen Kunststoff. Sie kann aus dem gleichen Material bestehen wie die Zwischenschicht 4. Alternativ ist es auch denkbar, dass die Zwischenschicht 4 aus einem ersten Kunststoff und die Verbindungshülse 9 aus einem zweiten Kunststoff besteht, wobei der erste Kunststoff und der zweite Kunststoff miteinander verbindbar sind. Von Vorteil ist, wenn der erste Kunststoff und der zweite Kunststoff durch Erwärmen miteinander verbindbar sind, und somit das Verbinden der Verbindungshülse 9 mit der Zwischenschicht 4 gleichzeitig mit dem Verbinden der ersten Schicht 2 und der zweiten Schicht 3 mit der Zwischenschicht 4 beim Laminieren der Schichten 2, 3 erfolgen kann, was eine einfache und kostengünstige Herstellung des Mehrschichtkörpers 1 begünstigt. Die Verbindungshülse 9 weist auf ihrer Innenseite 11 nutartige Vertiefungen 12 auf. Diese nutartigen Vertiefungen 12 sind in Form eines Gewindes angeordnet. Alternativ können die nutartigen Vertiefungen 12 auf der Innenseite der Verbindungshülse 9 auch ringförmig, beispielsweise in Umfangsrichtung umlaufend, angeordnet sein. Kommt es im Schadensfall zum Bruch der ersten Schicht 2 und/oder der zweiten Schicht 3, so stabilisiert die Verbindungshülse 9 die Geometrie des Befestigungsbereich 5, die sich auch nach dem Bruch beider Schichten nur minimal verändert.

Figur 2 zeigt eine Befestigungsanordnung 13 mit dem Mehrschichtkörper 1 aus Figur 1 und einem Befestigungselement 14. Das Befestigungselement 14, in Form eines Hinterschnittankers, weist an seinem in Einbringrichtung vorderen Ende einen Spreizbereich 15 auf, der in verspreiztem Zustand in dem Hinterschnitt 8 eingreift und das Befestigungselement 14 in der zweiten Bohrung 7 der zweiten Schicht 3 befestigt. Hierzu weist das Befestigungselement eine Spreizhülse 16 auf, die mit einem elastischen Überzug 17 mittels einer Unterlegscheibe 18 in den Hinterschnitt 8 gedrückt wird, in dem die Unterlegscheibe 18 in Einbringrichtung nach vorn bewegt wird, beispielsweise durch Aufschrauben einer Mutter 19. Die Unterlegscheibe 18 besteht aus einem Bund 20, der auf der äußeren Seite der ersten Schicht 2 aufliegt und die erste Bohrung 6 abdeckt, und einem hülsenförmigen Kragen 21, der einen Bolzen 22 mit einem Außengewinde als Lastangriffsmittel 23 umgreift. Auf den Bolzen 22 ist die Mutter 19 aufgeschraubt. An dem hülsenförmigen Kragen 21 sind Erhebungen 24 angeordnet, die mit den nutartige Vertiefungen 12 der Verbindungshülse 9 korrespondieren und mit diesen in Eingriff stehen. Die Erhebungen 24 weisen die Form eines Außengewindes auf. Je nach Gestaltung der nutartigen Vertiefungen 12 kann ihre Form hiervon abweichen. Durch die Verbindung zwischen Verbindungshülse 9 und Kragen 21 wird zum einen das Befestigungselement 14 auch in der ersten Schicht 2 verankert. Zum anderen können durch die Erhebungen 24, die in die nutartigen Vertiefungen 12 eingreifen, kleinere Formänderungen des Befestigungsbereich 5, wie sie beim Bruch einer oder beider Schichten in 2, 3 des Mehrschichtkörpers 1 auftreten können, aufgenommen werden, so dass weiterhin Kräfte zwischen den Schichten 2, 3 und dem Befestigungselement 14 übertragen werden können. Somit wird ein Ausknüpfen des Befestigungselements 14 aus dem Befestigungsbereich 5 des Mehrschichtkörpers 1 verhindert.

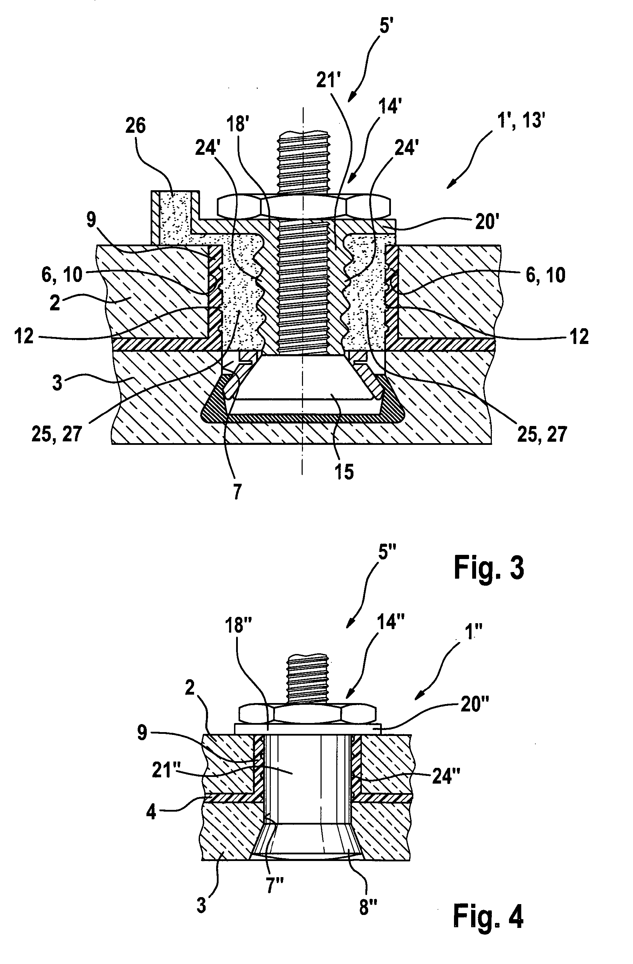

Figur 3 zeigt eine Variante der in Figur 2 beschriebenen Befestigungsanordnung. Um Wiederholungen zu vermeiden, wird im Folgenden nur auf die Unterschiede zu der in Figur 2 dargestellten Befestigungsanordnung eingegangen. Die in Figur 3 dargestellte Befestigungsanordnung 13' weist einen Mehrschichtkörper 1 mit einer ersten Bohrung 6 in der ersten Schicht 2 auf, deren Durchmesser größer ist als der Durchmesser einer zweiten Bohrung 7 in der zweiten Schicht 3. Der Durchmesser der zweiten Bohrung 7 korrespondiert mit dem Außendurchmesser des Befestigungselements 14'. durch den vergrößerten Durchmesser der ersten Bohrungen 6 können Maßtoleranzen, die sich aus der Lage der Bohrungen 6, 7 und dem Bohrlochdurchmesser ergeben, von dem zwischen Befestigungselement 14 und der Wand 10 der ersten Bohrung 6 entstehenden Ringspalt 25 ausgeglichen werden. Das Befestigungselement 14' weist eine Einfüllöffnung 26 auf, die seitlich am Bund 20' der Unterlegscheibe 18' angeordnet ist und zu dieser radial verläuft. Durch diese Einfüllöffnung 26 kann eine Füllmasse 27 in den Ringspalt 25 eingebracht werden, so dass dieser vollständig verfüllt wird. Durch die Füllmasse 27 wird zudem die Verbindungshülse 9 mit dem hülsenförmigen Kragen 21 des Befestigungselements 14 verbunden. Die nutartigen Vertiefungen 12 auf der Innenseite der Verbindungshülse 9 sowie in Achsrichtung des hülsenförmigen Kragens 21' der Unterlegscheibe 18' wellenförmig ausgestaltete Erhebungen 24' bewirken insbesondere, dass eine Kraftübertragung in Achsrichtung des Befestigungselements 14' zwischen Befestigungselement 14' und Verbindungshülse 9, und somit auch der ersten Schicht 2, möglich ist.

In Figur 4 ist eine weitere Befestigungsanordnung 13" mit einem Mehrschichtkörper 1" dargestellt, der sich von dem in den Figuren 1 ist 3 dargestellten Mehrschichtkörper dadurch unterscheidet, das die zweite Bohrung 7" die zweite Schicht 3 durchdringt. Die zweite Bohrung 7" ist aber weiterhin mit einem Hinterschnitt 8" ausgeführt. Das Befestigungselement 14" ist ein Hinterschnittanker, der den Mehrschichtkörper 1" durchdringt und dessen in Einbringrichtung vorderes Ende bündig mit der Außenseite der zweiten Schicht 3 abschließt. Zur Befestigung schließt sich dem zylindrischen Teil des hülsenförmigen Kragens 21" ein Teil mit vergrößertem Durchmesser an. Dieser konische Teil füllt den Hinterschnitt 8" formschlüssig aus, so dass das Befestigungselement 14" im Befestigungsbereich 5" befestigt ist.

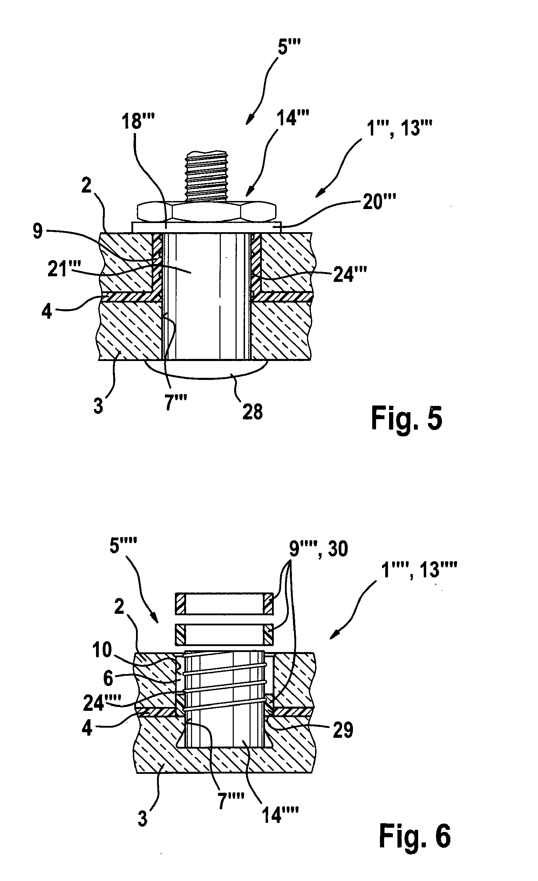

Alternativ hierzu ist in Figur 5 eine Befestigungsanordnung 13"' mit einem Mehrschichtkörper 1'" dargestellt, dessen zweite Schicht 3 eine zweite Bohrung 7"' aufweist, die als zylindrische Durchgangsbohrung ausgeführt ist. Das Befestigungselement 14"' durchdringt den Mehrschichtkörper 1"' vollständig und wird mit dem Mehrschichtkörper 1"' dadurch verbunden, dass der Bund 20'" und ein Auflegeteil 28, das sich am in Einbringrichtung vorderen Ende des Befestigungselements 14"' befindet, jeweils auf den Außenseiten der ersten Schicht 2 und der zweiten Schicht 3 aufliegt. Sowohl der Bund 20'" als auch das Auflegeteil 28 weist einen Durchmesser auf, der größer ist als der Durchmesser der Bohrungen 6, 7"'.

Figur 6 zeigt eine erfindungsgemäße Befestigungsanordnung 13"" während der Herstellung. Der Mehrschichtkörper 1 "", besteht aus einer ersten Schicht 2, einer zweiten Schicht 3 und einer Zwischenschicht 4, wobei jede der Schichten eine Bohrung 6, 7"", 29 aufweist. Das Verfahren zum Herstellen der Befestigungsanordnung 13"" sieht vor, dass in einem ersten Schritt die erste Bohrung 6 der ersten Schicht 2 mit der zweiten Bohrung 7"" der zweiten Schicht 3 und der dritten Bohrung 29 der Zwischenschicht 4 aufeinander ausgerichtet werden. In einem zweiten Schritt wird dann die erste Schicht 2 und die zweite Schicht 3 durch die Zwischenschicht 4 miteinander verbunden. Während oder nach diesen Schritten wird das Befestigungselement 14"" sowie die Verbindungshülse 9"" in die Bohrungen 6, 7"", 29 eingebracht und untereinander und mit dem Mehrschichtkörper 1"" verbunden. Die Verbindungshülse 9"" kann dabei aus mehreren Segmenten 30 bestehen, die einen Spalt zwischen der Wand 10 der ersten Bohrung 6 und dem Befestigungselement 14"" ausfüllen. Die einzelnen Segmente 30 der Verbindungshülse 9"" werden untereinander, mit der Wand 10 der ersten Bohrung 6 sowie mit der Zwischenschicht 4 verbunden, wobei das Befestigungselement 14"" mit Erhebungen 24"" in die Verbindungshülse 9"" eingreift. Auf diese Art wird eine Befestigungsanordnung 13"" geschaffen, mit dem bei einem Bruch des Mehrschichtkörpers 1"" ein Ausknüpfen des Befestigungselements 14"" aus dem Befestigungsbereich 5"" verhindert wird.

### Bezugszeichenliste

### Mehrschichtkörper, Befestigungsanordnung, Verfahren zur Herstellung der Befestigungsanordnung und Befestigungselement

- 1, 1', 1", 1"', 1"": Mehrschichtkörper
- 2: erste Schicht
- 3: zweite Schicht
- 4: Zwischenschicht
- 5, 5', 5", 5"', 5"": Befestigungsbereich
- 6: erste Bohrung
- 7, 7", 7"', 7"": zweite Bohrung
- 8, 8": Hinterschnitt
- 9, 9"": Verbindungshülse
- 10: Wand der ersten Bohrung 6
- 11: Innenseite
- 12: nutartige Vertiefungen auf der Innenseite der Verbindungshülse 9
- 13, 13', 13", 13"', 13"": Befestigungsanordnung
- 14, 14', 14", 14"', 14"": Befestigungselement
- 15: Spreizbereich
- 16: Spreizhülse
- 17: elastischer Überzug
- 18, 18', 18", 18"': Unterlegscheibe
- 19: Mutter
- 20, 20', 20", 20"': Bund
- 21, 21', 21 ", 21"': hülsenförmige Kragen
- 22: Bolzen
- 23: Lastangriffsmittel
- 24, 24', 24", 24"', 24"": Erhebung
- 25: Ringspalt
- 26: Einfüllöffnung
- 27: Füllmasse
- 28: Auflegeteil
- 29: Bohrung in der Zwischenschicht 4
- 30: Segment

## Patentansprüche

1. Mehrschichtkörper (1, 1', 1 ", 1"', 1 ""), insbesondere aus Verbundsicherheitsglas, mit einer ersten Schicht (2) und einer zweiten Schicht (3) sowie einer Zwischenschicht (4) zum Verbinden der Schichten (2, 3), wobei ein Befestigungsbereich (5, 5', 5", 5"', 5"") vorgesehen ist und der Befestigungsbereich (5, 5', 5", 5"', 5"") eine erste Bohrung (6) in der ersten Schicht (2) aufweist, **dadurch gekennzeichnet, dass** eine Verbindungshülse (9, 9"") mit der Zwischenschicht (4) und mit der Wand (10) der ersten Bohrung (6) verbunden ist.

2. Mehrschichtkörper nach Anspruch 1, **dadurch gekennzeichnet, dass** die zweite Schicht (3) eine zweite Bohrung (7, 7", 7"', 7"") aufweist.

3. Mehrschichtkörper nach Anspruch 1 oder 2, **dadurch gekennzeichnet, dass** die Zwischenschicht (4) aus einem Kunststoff besteht, und dass die Verbindungshülse (9, 9"") aus dem gleichen Material besteht wie die Zwischenschicht (4).

4. Mehrschichtkörper nach Anspruch 3, **dadurch gekennzeichnet, dass** der Kunststoff ein thermoplastischer Kunststoff ist.

5. Mehrschichtkörper nach Anspruch 1 oder 2, **dadurch gekennzeichnet, dass** die Zwischenschicht (4) aus einem ersten Kunststoff besteht und die Verbindungshülse (9, 9"") aus einem zweiten Kunststoff besteht, und dass der erste Kunststoff und der zweite Kunststoff, insbesondere durch Erwärmen, miteinander verbindbar sind.

6. Mehrschichtkörper nach einem der Ansprüche 1 bis 5, **dadurch gekennzeichnet, dass** die Verbindungshülse (9, 9"") auf ihrer Innenseite (11) eine nutartige Vertiefung (12) aufweist.

7. Mehrschichtkörper nach Anspruch 6, **dadurch gekennzeichnet, dass** die nutartige Vertiefung (12) auf der Innenseite (11) der Verbindungshülse (9, 9"") in Form eines Gewindes angeordnet ist.

8. Mehrschichtkörper nach Anspruch 6, **dadurch gekennzeichnet, dass** die nutartige Vertiefung (12) auf der Innenseite (11) der Verbindungshülse (9, 9"") ringförmig angeordnet ist.

9. Mehrschichtkörper nach einem der Ansprüche 1 bis 8, **dadurch gekennzeichnet, dass** die erste Bohrung (6) oder die zweite Bohrung (7, 7", 7"', 7"") als Hinterschnittbohrung ausgeführt ist.

10. Befestigungsanordnung (13, 13', 13", 13"', 13"") mit einem Mehrschichtkörper (1, 1', 1 ", 1"', 1 "") nach einem der Ansprüche 1 bis 9, **dadurch gekennzeichnet, dass** der Befestigungsbereich (5, 5', 5", 5"', 5"") ein Befestigungselement (14, 14', 14", 14"', 14"") aufweist, mit dem die Verbindungshülse (9, 9"") verbindbar ist.

11. Befestigungsanordnung nach Anspruch 10, **dadurch gekennzeichnet, dass** die Verbindungshülse (9, 9"") mit dem Befestigungselement (14, 14', 14", 14"', 14"") in Eingriff steht.

12. Befestigungsanordnung nach Anspruch 10, **dadurch gekennzeichnet, dass** die Verbindungshülse (9) mit dem Befestigungselement (14') mittels einer Füllmasse (27) verbunden ist.

13. Befestigungsanordnung nach einem der Ansprüche 10 bis 12, **dadurch gekennzeichnet, dass** die erste oder die zweite Bohrung (7, 7", 7"', 7"") mit Hinterschnitt (8, 8") ausgeführt ist, und dass das Befestigungselement (14, 14', 14", 14"") einen Spreizbereich (15) aufweist, der in den Hinterschnitt (8, 8") eingreift.

14. Befestigungsanordnung nach einem der Ansprüche 10 bis 12, **dadurch gekennzeichnet, dass** die zweite Bohrung (7", 7"') eine Durchgangsbohrung ist, und dass das Befestigungselement (14", 14"') durch die zweite Bohrung (7", 7"') hindurchführbar ist.

15. Verfahren zum Herstellern einer Befestigungsanordnung (13, 13', 13", 13"', 13"") nach einem der Ansprüche 10 bis 14, wobei in einem ersten Schritt die erste Bohrung (6) der ersten Schicht (2) mit der zweiten Bohrung (7, 7", 7"', 7"") der zweiten Schicht (3) und einer dritten Bohrung (29) in der Zwischenschicht (4) aufeinander ausgerichtet und in einem zweiten Schritt die erste und die zweite Schicht (2, 3) durch die Zwischenschicht (4) miteinander verbunden werden, **dadurch gekennzeichnet, dass** während oder nach diesen Schritten das Befestigungselement (14, 14', 14", 14"', 14"") und die Verbindungshülse (9, 9"") in die Bohrungen (6, 7, 7", 7"', 7"", 29) eingebracht und miteinander verbunden werden.

16. Befestigungselement (14, 14', 14", 14"', 14"") für einen Mehrschichtkörper (1, 1', 1 ", 1"', 1 ""), insbesondere zur Verwendung in einer Befestigungsanordnung (13, 13', 13", 13"', 13"") nach einem der Ansprüche 10 bis 14, mit einem Lastangriffsmittel (23) und einer Unterlegscheibe (18, 18'), wobei die Unterlegscheibe (18, 18', 18", 18"') einen Bund (20, 20', 20", 20"') und einen hülsenförmigen Kragen (21, 21', 21", 21'") aufweist, **dadurch gekennzeichnet, dass** der hülsenförmige Kragen (21, 21', 21", 21'") an seinem äußeren Umfang eine sich insbesondere in Umfangsrichtung erstreckende Erhebung (24, 24', 24", 24"', 24"") aufweist.
